**Europäisches Patentamt**

**European Patent Office**

**Office européen des brevets**

(19)

(11) Veröffentlichungsnummer: **0 092 732**
**B1**

# EUROPÄISCHE PATENTSCHRIFT

(12)

(45) Veröffentlichungstag der Patentschrift:
**24.07.85**

(51) Int. Cl.⁴: **C 09 C 1/48**

(21) Anmeldenummer: **83103516.7**

(22) Anmeldetag: **12.04.83**

(54) **Verfahren zur Abtrennung von Russ aus wässrigen Suspensionen.**

(30) Priorität: **23.04.82 DE 3215178**

(43) Veröffentlichungstag der Anmeldung:
**02.11.83 Patentblatt 83/44**

(45) Bekanntmachung des Hinweises auf die Patenterteilung:
**24.07.85 Patentblatt 85/30**

(84) Benannte Vertragsstaaten:
**AT BE DE FR GB IT NL**

(56) Entgegenhaltungen:
**GB - A - 907 485**

(73) Patentinhaber: **HOECHST AKTIENGESELLSCHAFT,
Postfach 80 03 20, D-6230 Frankfurt am Main 80 (DE)**

(72) Erfinder: **Wolter, Manfred, Dr., Am grünen Weg 4,
D-5030 Hürth (DE)**
Erfinder: **Dorn, Friedrich-Wilhelm, Dr., Giselherweg 3,
D-5030 Hürth (DE)**
Erfinder: **Heymer, Gero, Dr., Fasanenaue 12,
D-5042 Erftstadt (DE)**
Erfinder: **Stephan, Hans-Werner, Ölbergstrasse 77,
D-5000 Köln (DE)**

# Beschreibung

Die vorliegende Erfindung betrifft ein Verfahren zur diskontinuierlichen Abtrennung eines vorwiegend aus Russ bestehenden Feststoffes aus seiner wässerigen Suspension durch Filtration mit Hilfe einer Filterpresse.

Wässerige Russsuspensionen fallen beispielsweise an, wenn man den bei der Vergasung von schwerem Heizöl oder Rückständen aus der Erdöl-Verarbeitung bei Temperaturen zwischen 1100 und 2000° C sowie Drucken von 10 bis 100 bar unter Zufuhr von sauerstoffhaltigen Gasen und ggf. Wasserdampf entstehenden, hauptsächlich aus Kohlenmonoxid und Wasserstoff bestehenden Gasstrom mit Wasser auswäscht. Bei der Gaswäsche werden die aus dem Schwermetallgehalt des Erdöles herrührenden Aschebestandteile mit niedergeschlagen. Die anfallenden wässerigen Russsuspensionen, deren Feststoff zu mindestens 97% aus Russ besteht, weisen üblicherweise Feststoffgehalte von 0,5 bis 2% auf, da höher konzentrierte wässerige Russsuspensionen ein pastöses Fliessverhalten aufweisen bzw. stichfest sind.

Zur Verwertung dieses in wässeriger Suspension mit geringem Feststoffgehalt vorliegenden Russes, welche aufgrund seiner hohen BET-Oberfläche von etwa 1000 m²/g gute Adsorptionseigenschaften besitzt, ist es erforderlich, den Russ vom Wasser abzutrennen.

Um dies zu erreichen, wird in der DE-C Nr. 2546072 vorgeschlagen, die wässerige Russsuspension mit Kohlenwasserstoffen zu behandeln, wodurch der Russ so hydrophob wird, dass er sich leicht vom Wasser abtrennen lässt. Nachteilig ist dabei, dass der vom Wasser abgetrennte Russ ein pulveriges oder pelletisiertes Material darstellt, welches noch bis zu 90% Wasser und Kohlenwasserstoffe enthält. Um daraus trockenen Russ zu erhalten, muss das entflammbare Material in einem Trockenapparat unter entsprechenden Sicherheitsmassnahmen behandelt werden.

Wenn man die durch die Anwendung von Kohlenwasserstoffen auftretenden Nachteile vermeiden will, so bleibt nur die Möglichkeit, den Russ aus der Suspension durch Filtration abzutrennen, wobei die Verwendung von Zentrifugen oder Separatoren wegen der mit ansteigendem Feststoffgehalt zunehmenden Viskosität der Russsuspension ausscheidet. Darüber hinaus werden wegen des starken Wasserbindungsvermögens des Russes auf Vakuumdrehfiltern bei kleiner Filterleistung nur Filterkuchen erhalten, welche mehr als 90% Wasser enthalten und deren Trocknung energetisch aufwendig ist. Schliesslich wird in der DE-A Nr. 2606098 vorgeschalgen, Wasser aus einem Russ- Wasser-Gemisch dadurch abzutrennen, dass man das Gemisch mit Hilfe einer Bandfilterpresse dynamisch auspresst. Dabei werden die Filterbänder, von denen mindestens eines wasserdurchlässig ist, je Umlauf mehrmals um mindestens 90° umgelenkt. Geht man dabei von einer wässerigen Russsuspension mit 2% Feststoff aus, so wird ein Filterkuchen mit 16% Feststoff erhalten, dessen Trocknung immer noch recht energieaufwendig ist.

Es ist Aufgabe der vorliegenden Erfindung, ein Verfahren zur diskontinuierlichen Abtrennung eines vorwiegend aus Russ bestehenden Feststoffes aus wässeriger Suspension mit Feststoffgehalten von 0,5 bis 2% durch Filtration anzugeben, bei welchem ein Filterkuchen mit hohem Feststoffgehalt zur Verminderung der Energiekosten bei der anschliessenden Trocknung des abfiltrierten Russes anfällt. Das wird erfindungsgemäss dadurch erreicht, dass man eine vertikal angeordnete Röhren-Filterpresse verwendet und sie mit Enddrukken von 30 bis 100 bar unter Ausbildung eines Filterkuchens von 2 bis 3 mm Dicke sowie mit mindestens 17% Feststoff betreibt und dass man anschliessend den Pressdruck aufhebt, wodurch der Filterkuchen unter Bildung mechanisch stabiler, nichtschmierender, unregelmässig geformter flacher Plättchen mit höchstens 10 mm Kantenlänge zerfällt. Dabei können die Enddrucke auch 50 bis 90 bar betragen.

Die gute Filtrationswirkung der Röhren-Filterpresse, wie sie beispielsweise aus der DE-C Nr. 1761716 bekannt ist, beruht im wesentlichen auf dem hohen Enddruck, welcher über eine zylindrische, wasserundurchlässige Membran auf die in einer senkrecht hängenden Röhre befindliche Suspension ausgeübt wird. Der im wesentlichen aus Russ und Wasser bestehende Filterkuchen bildet sich dabei auf einem Filtertuch, welches auf einem konzentrisch eingesetzten zylindrischen Traggerüst aufgebracht ist, während das Filtrat im Innern der aus Filtertuch und Traggerüst gebildeten Röhre abläuft. Der eine Dicke von 2 bis 3 mm aufweisende Filterkuchen ist aufgrund seiner voluminösen Struktur so elastisch, dass er bei Aufhebung des Pressdruckes wieder expandiert und dabei in eine grosse Zahl kleiner, unregelmässig geformter flacher Plättchen mit höchstens 10 mm Kantenlänge zerfällt. Die Plättchen sind mechanisch stabil und schmieren nicht; sie können ohne zu zerfallen beispielsweise in einem Drehrohrofen getrocknet werden.

Schliesslich zerfallen die Plättchen auch beim Erhitzen auf Temperaturen von über 1500° C nicht. Im feuchten Zustand beträgt das Schüttgewicht der Plättchen 600 bis 650 g/l, während nach ihrer Trocknung bei 200° C ein Schüttgewicht von 180 bis 210 g/l erreicht wird.

In den folgenden Beispielen wurde eine wässerige Russsuspension mit einem Feststoffgehalt von 1% (davon 98,5 Teile Russ und 1,5 Teile Asche) filtriert, welche durch Auswaschen von Synthesegas erhalten wurde, wobei das Synthesegas durch Druckvergasung von Erdöl-Destillationsrückständen nach dem SHELL-Verfahren (vgl. „Hydrocarbon Processing", Band 52, November 1973, S. 181) hergestellt worden war.

*Beispiel 1:* (Vergleichsbeispiel)

Über ein Vakuum-Drehtrommelfilter mit 0,2 m² Filterfläche wurden 600 l/h der wässerigen Russsuspension filtriert. Der kontinuierlich abgenommene, stark schmierende Filterkuchen wies im Mittel einen Feststoffgehalt von 5,9% auf. Nach Trocknen des Filterkuchens bei 200° C wurde ein Russ mit einer BET-Oberfläche [vgl. Brunauer, Emmet und Teller; „J. Amer. Chem. Soc.", 60, (1938) 309] von 830 ± 40 m²/g, einem Porenvolumen von 2,7 ± 0,2 ml/g und einem Schüttgewicht von 150 ± 15 g/l erhalten.

*Beispiel 2:* (Vergleichsbeispiel)

Die wässerige Russsuspension wurde mit Hilfe einer diskontinuierlich betriebenen Kammerfilterpresse filtriert, wobei der bei einem Pumpendruck von 4,2 bar resultierende feste, klebrige Filterkuchen Feststoffgehalte von 7,6 bis 12,5% aufwies. Nach Trocknen des Filterkuchens bei 200° C wurde ein Russ mit einer BET-Oberfläche von 850 ± 40 m²/g, einem Porenvolumen von 2,9 ± 0,2 ml/g und einem Schüttgewicht von 160 ± 20 g/l erhalten.

*Beispiel 3:* (gemäss der Erfindung)

Zur Filtration der Russsuspension wurde eine Röhren-Filterpresse von in der DE-PS Nr. 1 761 716 beschriebenen Konstruktion mit einem Füllvolumen von 55 l verwendet. Der Enddruck betrug 100 bar. Der gesamte Zyklus vom Füllen der Röhren-Filterpresse bis zum Abreinigen ihres Filterkuchens betrug 6 min. Der in Form von kleinstückigen, nicht schmierenden Plättchen von etwa 3 mm Dicke anfallende Filterkuchen wies einen Feststoffgehalt von 28,2% auf. Nach Trocknen der Plättchen bei 200° C wurde ein Russ mit einer BET-Oberfläche von 860 m²/g, einem Porenvolumen von 3,1 ml/g und einem Schüttgewicht von 192 g/l erhalten.

*Beispiel 4:* (gemäss der Erfindung)

In der im Beispiel 3 verwendeten Röhren-Filterpresse wurden 560 l Russsuspension in 10 min unmittelbar aufeinander folgenden Zyklen filtriert. Der Enddruck betrug in jedem Zyklus 90 bar. Der in Form kleinstückiger Plättchen von etwa 2 bis 3 mm Dicke anfallende Filterkuchen wies einen Feststoffgehalt von 29 ± 1% auf. Nach Trocknen der Plättchen bei 200° C wurde Russ mit BET-Oberfläche von 875 ± 30 m²/g, Porenvolumen von 2,9 ± 0,4 ml/g und Schüttgewicht von 195 ± 15 g/l erhalten.

*Beispiel 5:* (gemäss der Erfindung)

Beispiel 3 wurde mit der Abänderung wiederholt, dass der Enddruck nur 50 bar betrug. Der in Form von Plättchen mit einer Dicke von etwa 2 bis 3 mm anfallende Filterkuchen wies einen Feststoffgehalt von 21,9% auf. Die getrockneten Plättchen hatten eine BET-Oberfläche von 865 m²/g und ein Schüttgewicht von 187 g/l.

*Beispiel 6:* (gemäss der Erfindung)

Beispiel 3 wurde mit der Abänderung wiederholt, dass der Enddruck nur 30 bar betrug. Der in Form von Plättchen mit einer Dicke von etwa 2 bis 3 mm anfallende Filterkuchen wies einen Feststoffgehalt von 17,3% auf. Die getrockneten Plättchen hatten eine BET-Oberfläche von 875 m²/g und ein Schüttgewicht von 180 g/l.

## Patentansprüche

1. Verfahren zur diskontinuierlichen Filtration einer durch Auswaschen von durch Druckvergasung von schwerem Heizöl oder Rückständen aus der Erdöl-Verarbeitung erhaltenem Synthesegas mit Wasser gebildeten wässerigen Suspension von Asche und vorwiegend Russ mit Hilfe einer Filterpresse, dadurch gekennzeichnet, dass man eine vertikal angeordnete Röhren-Filterpresse verwendet und sie mit Enddrucken von 30 bis 100 bar unter Ausbildung eines Filterkuchens von 2 bis 3 mm Dicke sowie mit mindestens 17% Feststoff betreibt und dass man anschliessend den Pressdruck aufhebt, wodurch der Filterkuchen unter Bildung mechanisch stabiler, nichtschmierender, unregelmässig geformter, flacher Plättchen mit höchstens 10 mm Kantenlänge zerfällt.

2. Verfahren nach Anspruch 1, dadurch gekennzeichnet, dass die Enddrucke von 50 bis 90 bar betragen.

## Revendications

1. Procédé de filtration en discontinu à l'aide d'un filtre-presse d'une suspension aqueuse consistant en cendres et essentiellement en noir de fumée, obtenue par lavage à l'eau d'un gaz de synthèse provenant de la gazéification sous pression de mazout lourd ou de résidus provenant du traitement de pétrole, caractérisé en ce que l'on utilise un filtre-presse tubulaire agencé verticalement et on le fait fonctionner sous des pressions finales de 30 à 100 bar, avec formation d'un gâteau de filtration présentant une épaisseur de 2 à 3 mm et une teneur en solides d'au moins 17% et on supprime ensuite la pression d'essorage avec désintégration du gâteau de filtration en petites plaques plates façonnées irrégulièrement, non grasses et stables mécaniquement, d'une longueur des arêtes de 10 mm au plus.

2. Procédé selon la revendication 1, caractérisé en ce que les pressions finales s'élèvent à 50-90 bar.

## Claims

1. Process for discontinuously filtering with the aid of a filter press an aqueous suspension consisting of ash and essentially of carbon black, obtained by water-scrubbing synthesis gas originating from the gazification under pressure of heavy oil or residues originating from the processing of petroleum, characterized in that a tube filter press arranged in upright position is used and operated under a final pressure of 30 to 100 bar with the resultant formation of a filter cake at least 2 to 3 mm thick and containing at least 17% solid matter, and the squeezing pressure is then released to effect disintegration of the filter cake into mechanically stable, not greasy, irregularly shaped flat platelets with edges at most 10 mm long.

2. Process as claimed in Claim 1, characterized in that the final pressure is 50 to 90 bar.